# EUROPÄISCHE PATENTSCHRIFT

(11) **EP 2 539 252 B1**
(45) Veröffentlichungstag und Bekanntmachung des Hinweises auf die Patenterteilung: **02.04.2014**
(21) Anmeldenummer: 10784972.1
(22) Anmeldetag: 11.11.2010
(51) Int. Cl.: B65G 17/32, B65G 47/84

(54) **FLASCHENKLAMMER MIT SPERRE**
BOTTLE GRIPPER PROVIDED WITH A BLOCKING DEVICE.
PINCES POUR BOUTEILLES DOTÉES D' UN SYSTÈME DE BLOCAGE.

(30) Priorität: 25.02.2010 DE 102010009364
(43) Veröffentlichungstag der Anmeldung: 02.01.2013
(73) Patentinhaber: KHS GmbH, 44143 Dortmund (DE)
(72) Erfinder: FAHLDIEK, Andreas, 55743 Idar-Oberstein (DE)
(86) Internationale Anmeldenummer: PCT/EP2010/006887
(87) Internationale Veröffentlichungsnummer: WO 2011/103889

(56) Entgegenhaltungen:
- EP-A1- 1 375 395
- EP-B1- 0 223 999
- DE-A1-102005 041 929

## Beschreibung

Die Erfindung richtet sich auf eine Flaschenklammer mit zwei über die jeweiligen Schwenkachsen hinaus verlängerten Klammerarmen, die in Schließstellung gehalten sind.

Derartige Flaschenklammern werden zum Halten und Transportieren von leeren oder gefüllten Flaschen, z.B. PET-Flaschen, im Nassteil einer Abfüllanlage eingesetzt, wobei neben der Erzeugung der Haltekraft durch eine Zugfeder auch Magneten, je nach Konstruktion auch Druckfedern od. dgl., eingesetzt werden können. Lediglich als Beispiel sei hier auf die DE 198 30 456 B oder das DE 20 2005 002 924 U verwiesen.

Des Weiteren ist aus der DE 20 2004 003 716 U eine Greifer bekannt, welcher mittels Steuerelement einer Nockensteuerung auf unterschiedliche definierte Mündungsdurchmesser im geöffneten und geschlossenen Grelfzustand eingestellt werden kann.

Ein Problem derartiger Klammern besteht darin, diese gegen ungewolltes Öffnen insbesondere dann zu sichern, wenn durch die Klammer eine Flasche ergriffen worden Ist, d.h. es ist besonders zweckmäßig, die Schließstellung so zu blockieren, dass es nicht zu einem ungewollten Öffnen kommen kann.

Hier setzt die Erfindung an, deren Aufgabe darin besteht, eine Sicherung wenigstens für die Schließstellung der Flaschen bereitzustellen, die einfach und kostengünstig ist und die den sonstigen Anforderungen in Flaschenabfüllanlagen gerecht wird.

Mit einer Flaschenklammer der eingangs bezeichneten Art wird diese Aufgabe gemäß der Erfindung dadurch gelöst, dass an einem Verlängerungsbereich eines Klammerarmes ein verdrehbares Sperrelemententeil und am Verlärigerungsbereich des anderen Klammerarmes ein festes Sperrelemententeil vorgesehen ist.

Die Erfindung hat den Vorteil, dass hier eine einfache, zweckmäßige Gestaltung des Sperrens der Flaschenklammer ermöglicht wird.

Nach der Erfindung ist auch vorgesehen, dass das verdrehbare Sperrelemententeil mit einem Steuerstift oder einer Steuerrolle versehen ist, die sich zur Ausübung einer Entsperrkraft der beiden Sperrelemententeile an einer Steuerkurve anlegt. Da die Haltekraft durch das Sperrelement aufgebracht wird, muss die Zugfeder nur die Lage der Klammerarme definieren, so dass durch eine leichte Feder eine leichte Flaschenübergabe ermöglicht wird, es kommt zu weniger Verschleiß und einer geringeren Geräuschentwicklung. Anstelle einer Zugfeder sind auch andere Mechanismen, wie Druckfedern oder Magnete, verwendbar.

Weitere Ausgestaltungen der Erfindung ergeben sich aus den weiteren Unteransprüchen. Dabei kann insbesondere vorgesehen sein, dass das verdrehbare Sperrelement mit wenigstens einem Dauermagneten ausgerüstet ist.

Je nach Gestaltung der Flaschenklammer kann vorgesehen sein, dass das verdrehbare Sperrelement und das feste Sperrelement mit wenigstens einem Dauermagneten derart versehen ist, dass sich die Dauermagneten der beiden Sperrelemententeile anziehen. Mit dieser Gestaltung ist es möglich, dass das zunächst entsperrte verdrehbare Sperrelemententeil in die Sperrlage automatisch zurückschwingt, da sich die beiden Dauermagneten in den jeweiligen Teilen anziehen, so dass das Sperrelement automatisch in die Blockierlage zurückgeführt wird.

Ein abgewandeltes Ausführungsbeispiel besteht nach der Erfindung darin, dass der mit dem verdrehbaren Sperrelemententeil ausgerüstete Verlängerungsbereich des einen Klammerarmes mit einem Paar Dauermagneten beidseitig der Drehachse und das verdrehbare Sperrelemententeil mit diesen zugeordneten zwei Dauermagneten beidseitig der Drehachse derart ausgerüstet ist, dass ein Paar der in der Gebrauchslage gegenüberliegenden Dauermagneten aufeinander eine abstoßende und das andere Dauermagnetenpaar eine anziehende Kraft ausübt.

In Ausgestaltung sieht die Erfindung vor, dass die Dauermagnetenpaare in unterschiedlicher Höhe bezogen auf die Schwenkebene im jeweiligen Element derart positioniert sind, dass ein Anschlag für das verdrehbare Sperrelement in der entsperrten Position gebildet ist, wobei ein Magnetpaar in einem Element gleichpolig und im anderen Element gegenpolig positioniert ist.

Durch die Position beidseitig der Drehachse des entsprechenden bewegbaren Sperrelemententeiles wird erreicht, dass die Dauermagneten dieses Sperrelemententeiles immer in die Blockierlage zurückschwenken.

Die Erfindung sieht auch vor, dass die mit der Seitenflanke des festen Sperrelemententeiles zusammenwirkende Seitenflanke des verdrehbaren Sperrelemententeiles derart gekrümmt ausgebildet ist, dass ein Blockieren der Klammerarme bei unterschiedlichen Flaschenhalsdurchmessern gewährleistet ist. Dabei kann auch vorgesehen sein, dass die Seitenflanke des verdrehbaren Sperrelemententeiles Dellen oder Nocken zur wenigstens zeitweisen Fixierung der Klammerarme in unterschiedlichen Haltepositionen aufweist.

Erkennbar weist die vorliegende Erfindung eine Reihe von Vorteilen auf. Sie ist nicht nur einfach und kostengünstig, sondern eine gut zu reinigende offene Konstruktion aus wenigen Einzelteilen. Die Sperre kann darüber hinaus selbsteinstellend wirken und dabei für unterschiedliche Greifbereiche oder unterschiedliche Mündungsdurchmesserbereiche eingesetzt werden. Die automatische Vorspannung führt dabei zur Erhöhung der Haltekraft und beseitigt das Spiel in den Flaschenklammern, wobei die Haltekraft sowohl bei vollen wie auch bei leeren Flaschen gewährleistet ist, seien es PET-Flaschen oder Glasflaschen.

Dadurch, dass die Sperre durch die Magnetkraft wirkt und eine Selbsthemmung durch die Geometrie der Flanken der Sperrelemententeile gewährleistet ist, wird ein unbeabsichtigtes Öffnen unterbunden.

Die Klammern bleiben auch ohne Steuerkurve im jeweiligen Zustand gesperrt. Durch einfache und kurze Steuerkurven werden Kosten erspart und eine Reinigung ist leichter möglich, beispielsweise entstehen keine oder nur geringe Spülschatten.

Mit der Erfindung werden auch Überleitkurven von Stern zu Stern vermieden, was insbesondere bei einem Formatwechsel (Handling von Flaschen unterschiedlicher Mündungsdurchmesser) keinerlei oder nur geringe Umbauten erfordert und ebenfalls für eine bessere Reinigung durch Vermeidung von Spülschatten führt.

Weitere Vorteile, Einzelheiten und Merkmale der Erfindung ergeben sich aufgrund der nachfolgenden Beschreibung sowie anhand der Zeichnung. Diese zeigt in
- Fig. 1: ein erstes Ausführungsbeispiel der Flaschenklammer nach der Erfindung mit einem Sperrelement in der das Öffnen der Klammer freigebenden Stellung,
- Fig. 2: in gleicher Darstellung wie Fig. 1 die Klammer mit dem Sperrelement in blockierter Schließstellung,
- Fig. 3: unterschiedliche Öffnungs- und Schließtakte gegenüberliegender Flaschenklammern,
- Fig. 4 bis 6: ein zweites Ausführungsbeispiel der Flaschenklammer nach der Erfindung in der Darstellung gemäß Fig. 2 in der Sperrstellung für drei unterschiedliche Flaschenhalsdurchmesser,
- Fig. 7: die Flaschenklammer in der das Öffnen der Klammer freigebenden Stellung,
- Fig. 8: unterschiedliche Öffnungs- und Schließtakte gegenüberliegender Flaschenklammern sowie in
- Fig. 9: drei werkzeuglose Montagephasen einer Flaschenklammer in räumlicher Darstellung.

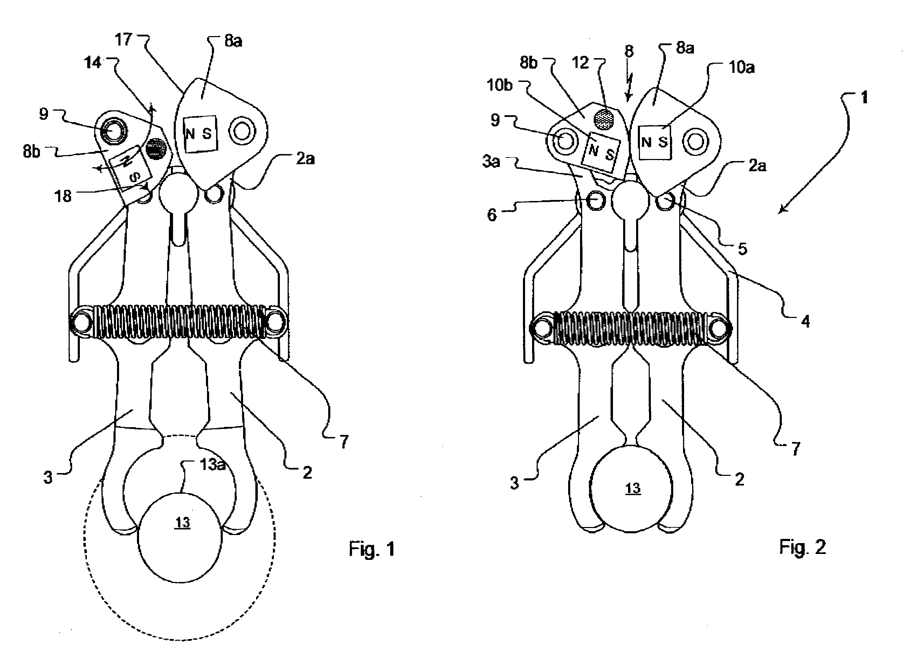

Die in Fig. 1 allgemein mit 1 bezeichnete Flaschenklammer wird von zwei Klammerarmen 2, 3 gebildet, die an einem Montageelement 4 mittels Schwenkachsen 5 bzw. 6 gegen die Kraft einer Zugfeder 7 verschwenkt werden können.

An ihren jenseits der Schwenkachsen 5 und 6 vorgesehenen Verlängerungsbereichen 2a bzw. 3a weist die Schwenkklammer 1 ein allgemein mit 8 bezeichnetes Sperrelement auf, wobei ein Sperrelemententeil 8a verdrehfest am Verlängerungsbereich 5a befestigt ist, während das andere Sperrelemententeil 8b um eine Drehachse 9 bewegbar ist.

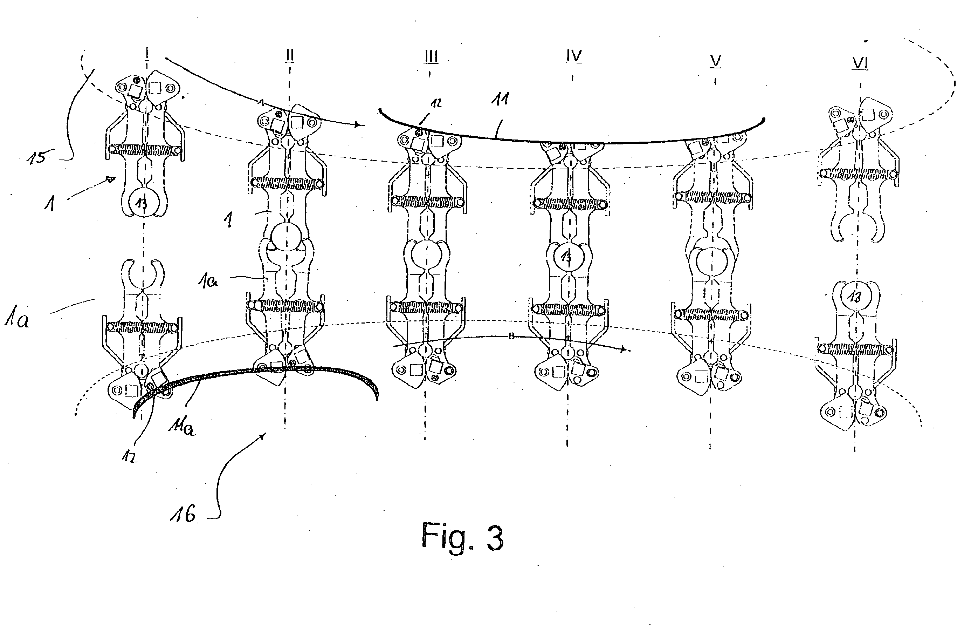

Jedes Sperrelemententeil 8a und 8b ist je mit einem Dauermagneten 10a und 10b ausgestattet, die so gepolt sind, dass sich das bewegbare Sperrelemententeil 8b automatisch in die in Fig. 2 dargestellte Sperrlage verschwenkt, falls es vorher über eine in Fig. 3 dargestellte Steuerkurve 11 mittels eines Steuerstiftes 12 aus der Sperrlage in die in Fig. 1 dargestellte Öffnungslage bewegt worden war.

Erkennbar lässt es die in Fig. 1 dargestellte entsperrte Lage der Klammerarme 2 und 3 zu, dass ein Behälter 19 mit seinem Flaschenhals 13 in die Klammerbereiche der Klammerarme eingeschoben werden kann. Ist der Flaschenhals 13 eingeführt und verlässt der Steuerstift 12 die entsprechende Steuerkurve, so schwingt das bewegbare Sperrelemententeil 8a gemäß Doppelpfeil 14 aus der in Fig. 1 dargestellten entsperrten Stellung in die Sperrstellung gemäß Fig. 2.

Die einzelnen Taktschritte, angedeutet auf zwei gestrichelt dargestellten Sternen 15, 16 oder ähnlichen Maschinenelementen in Fig. 3, sind mit I bis VI bezeichnet, wobei in Fig. 3 im Taktschritt I der Flaschenhals 13 von der oben dargestellten Flaschenklammer 1 fest gehalten ist, während die unten dargestellte Klammer 1a sich in entsperrter Stellung befindet, da über die Steuerkurve 11 a der Sperrstift 12 das verschwenkbare Steuerelemententeil über die freigebende Stellung verdreht hat. In Drehrichtung des Pfeiles A Fig. 3, obere Figurenhälfte, wird die Flasche in noch festgehaltener Position durch die Klammer 1 über der geöffneten Klammer 1a positioniert. Diese Situation ist in Position II dargestellt.

In der Übergabeposition gemäß Taktstellung III wird über die Steuerkurve 11 das bewegbare Sperrelemententeil der oberen Klammer 1 geöffnet, während gleichzeitig durch Freigabe des Sperrstiftes an der unteren Flaschenklammer 1 a durch die Kraft der Magnete das bewegbare Sperrelement in die Blockagestellung schwingt.

Da gleichzeitig gemäß Taktposition IV die Haltekraft der Klammer 1 a erhöht und die der Klammer 1 aufgehoben ist, vermag die Klammer 1 a den Hals 13 aus der Klammer 1 herauszuziehen, da lediglich die Kraft der Zugfeder 7 zu überwinden ist. Diese Auszugsposition ist unter V wiedergegeben, während die Position VI die fest ergriffene Flasche 13 in der Klammer 1a am unten dargestellten Stern 16 wiedergibt.

Grundsätzlich ist nach der Erfindung die Zugfeder 7 für die Arretierung der Flasche von untergeordneter Bedeutung. Durch den Verschluss über die Arretiervorrichtung kann die Feder sehr weich/leicht ausgebildet werden. Sie dient nur zur Zentrierung und Positionierung der Haltearme in entsperrter Position, was den Vorteil hat, dass dies weniger Verschleiß an Flaschenhals und Greifarmen bedingt bzw. eine geringere Kraft zum Öffnen der Greifarme nötig macht und damit die Laufruhe erhöht.

Wie sich insbesondere aus den Fig. 1 und 2 ergibt, weist sowohl das ortsfeste Sperrelemententeil 8a wie auch das um die Achsen 9 schwenkbare Sperrelemententeil 8b sich aneinanderlegende, gekrümmte Seitenflanken 17 bzw. 18 auf, deren Kurvenverlauf so gestaltet ist, dass je nach Durchmesser des Flaschenhalses 13a eines entsprechenden gegriffenen Gefäßes die bewegbare Flanke 18 an der Flanke des feststehenden Sperrelemententeiles in Eingriff kommt und damit das Öffnen der Klammer verhindert. Somit können unterschiedliche Flaschenhalsdurchmesser ergriffen werden.

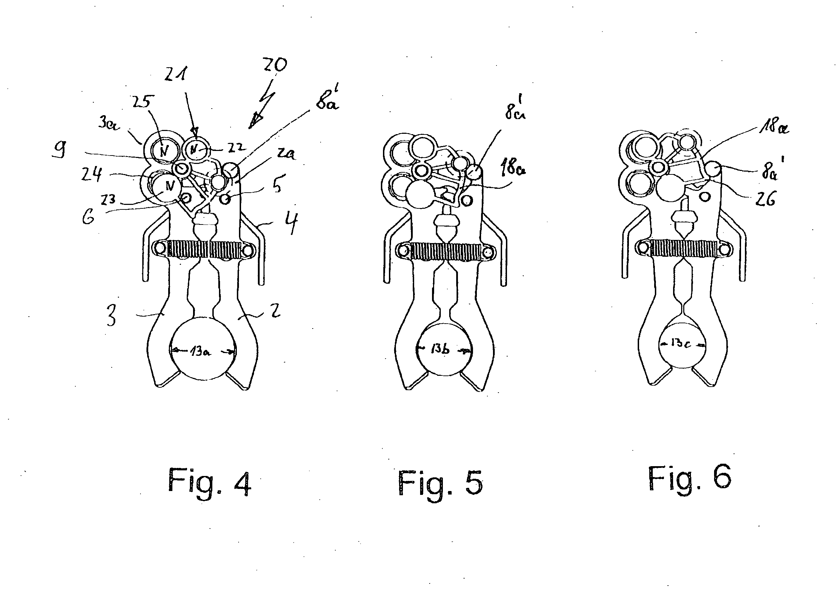

In den Fig. 4 bis 8 ist ein abgewandeltes Ausführungsbeispiel der Erfindung dargestellt. Dabei zeigt Fig. 4 in gleicher Aufsicht wie auf die Klammer 1 gemäß Fig. 1 und 2 eine hier mit 20 bezeichnete Flaschenklammer, wobei die funktionell gleichen Elemente der Klammer gemäß Fig. 1 bis 3 hier wiederum aufgegriffen werden. Auch hier werden die Klammerarme mit 2 und 3 bezeichnet, das Montageelement mit 4, die Dreh- und Schwenkachsen weisen die gleiche Bezugsziffer auf etc.

Im Unterschied zur Ausführungsform der Fig. 1, weist bei der Ausführungsform nach den Fig. 4 ff. das um die Drehachse 9 verdrehbare Sperrelemententeil, hier mit 21 bezeichnet, beidseitig der Drehachse 9 zwei Dauermagneten 22 und 23 auf, während im Verlängerungsbereich 3a des Klammerarmes 3 ebenfalls zwei Dauermagneten 24 und 25 beidseitig der Drehachse 9 positioniert sind.

Die Dauermagnetenpaare 22 und 23 bzw. 24 und 25 sind unterschiedlich gepolt, und zwar sind beispielsweise die in Fig. 4 zum Betrachter zeigenden Pole Nordpole, während die Unterseiten die Südpole aufweisen, wobei das Dauermagnetenpaar 24 und 25 gegenpolig positioniert ist, d.h. beispielsweise der Südpol des Dauermagneten 24 ist zum Betrachter ausgerichtet, während der Nordpol des Dauermagneten 25 zum Betrachter positioniert ist, derart, dass sich die beiden Dauermagneten 22 und 25 anziehen, während sich die Dauermagneten 23 und 24 abstoßen. Durch diese Magnetanordnung beidseitig der Drehachse 9 ist ein Zurückschwenken in die jeweils gewünschte Sperrlage gewährleistet. Zudem wird durch diese Anordnung ein annähernd gleichbleibendes Drehmoment (annähernd gleichförmige Rückstellkraft der Sperre) erzielt.

Im Ausführungsbeispiel der Fig. 4 ff. wird das feste Sperrelemententeil 8a am Verlängerungsbereich 2a des Klammerarmes 2 von einem Sperrstift gebildet, dessen zylindrische Seitenwand sich an der gekrümmten Seitenflanke des schwenkbaren Sperrelemententeiles 21 zum Sperren anlegt, wobei in den Fig. 4 bis 6 jeweils unterschiedliche Anlagepositionen je nach Flaschenhalsdurchmesser 13a, 13b bzw. 13c vorgegeben ist.

Fig. 4 zeigt dabei die Kontaktierung des Sperrzapfens 8a' im Einlaufbereich der Seitenflanke 18a bei vergrößertem Flaschenhalsdurchmesser, Fig. 5 den Anlagebereich des Sperrzapfens 8a' im mittleren Bereich der gekrümmten Seitenflanke 18a, wobei in Fig. 6 erkennbar ist, dass in der extremsten Schließstellung ein Rastnocken im Bereich am Ende der Seitenflanke 18a vorgesehen ist, dieser Sperrnocken ist mit 26 bezeichnet.

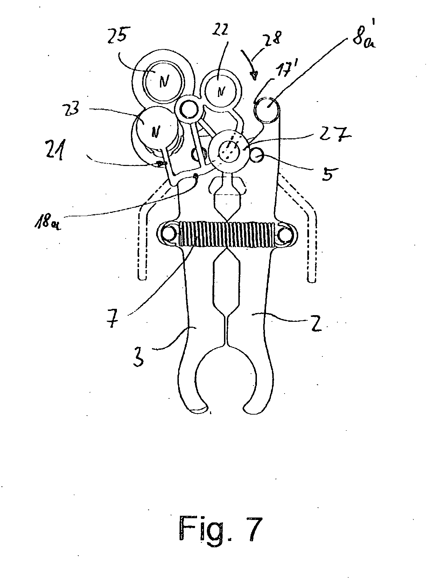

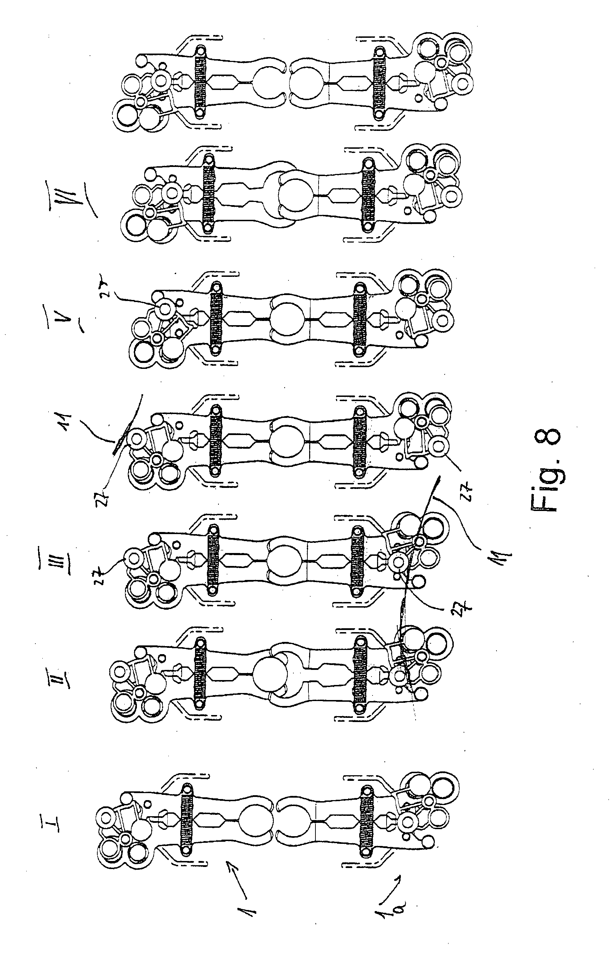

Um das bewegbare Sperrelemententeil 1 von beispielsweise der Blockagestellung gemäß Fig. 4 in die die Klammerarme 2 und 3 völlig freigebende Stellung gemäß Fig. 7 zu führen, ist oberhalb der Seitenflanke 18a ein Steuerstift mit Laufrad 27 vorgesehen, welches sich innerhalb der Umlaufbahn eines Sterns od. dgl. an einer Steuerkurve anlegen kann und damit das Sperrelemententeil 21 gemäß Pfeil 28 verdreht, so dass die beiden Klammerarme 2 und 3 lediglich von der Zugfeder 7 in Schließstellung gehalten werden, wobei die Kraft dieser Zugfeder so eingestellt ist, dass die Klammerarme 2 und 3 durch Eindrücken eines Flaschenhalses leicht geöffnet werden können. Die einzelnen Taktpositionen sind in Fig. 8 wiedergegeben.

Aus Fig. 7 ist durch eine Doppellinie angedeutet, dass der Dauermagnet 25 nach oben versetzt positioniert ist. Dies gilt auch relativ dazu für den Dauermagneten 22, die so positioniert sind, dass sie zwar übereinander streifen können, durch die Rücksetzung des Dauermagneten 23 nach unten kann dieser in der in Fig. 7 dargestellten Öffnungsstellung bis an den nach oben hervorstehenden Dauermagneten 25 herangeführt werden, so dass der Südpol des Dauermagneten 23 in dieser Öffnungsstellung mit dem Nordpol des Dauermagneten 25 in seitlichen Kontakt bei Aufbringung einer vergleichsweise geringen Haltekraft anschlagen und festgehalten werden kann. Das Einrasten erfolgt somit durch Überfahren der sich abstoßenden Magnete 23 und 24.

Wird durch einen leichten Impuls wie durch eine Steuerkurve 11b diese magnetische Anziehungskraft aufgehoben, schwingt das bewegbare Sperrelemententeil 21 gegen die Richtung des Pfeiles 28 und blockiert die Öffnungsbewegung der Klammerarme 2 und 3 sobald die Seitenflanke 18a mit dem Sperrnocken 8a' in Eingriff gerät. Dadurch stellt sich die Sperre automatisch ein, entsprechend dem Flaschenmündungsdurchmesser.

In Fig. 8 sind die einzelnen Taktschritte ähnlich wie in Fig. 3 im Übergabebereich einer Flasche von einem Maschinenelement, wie beispielsweise einem Stern oder einem anderen Maschinenelement. Die Steuerkurven 11a und 11 b sind lediglich schematisch dargestellt, mit denen das Laufrad 27 und damit das bewegbare Sperrelement bewegt wird.

Die Magnete in der anstoßenden und abstoßenden Doppelfunktion erzeugen immer eine Drehung, in der vorliegenden Ansicht gegen den Uhrzeigersinn, außer in der Stellung gemäß Fig. 7 bzw. Fig. 8 VI oben, dort bleibt die Klammer ohne Einwirkung der Steuerkurve durch die Selbsthaltung entsperrt.

In Fig. 9 sind drei Montagesituationen einer Flaschenklammer 1 dargestellt, wobei sich der rechte Klammerarm bereits montiert im Montageelement 4 befindet, während der auf Abstand gezeichnete linke Klammerarm 3 dort mittels einer Steckwelle 6a, die die Schwenkachse 6 bildet, in eine entsprechende Ausnehmung im Montagelement von oben eingeführt wird.

Die Dauermagneten 24 und 25 am Klammerarm 3 sind ebenfalls entsprechend bezeichnet, wobei in ihrer senkrechten Mittelebene eine Schwenkwelle 9a vorgesehen ist, die später die Drehachse 9 für das in der Fig. 9 nicht näher dargestellte Speerelement 21 bildet.

Das Montagelement 4 ist mit einer Sicherungsstegplatte 31 ausgerüstet, an der die Klammerarme 2 und 3 bei der Montage vorbeigleiten können, während die Stegplatte 31 in der unteren Abbildung der Fig. 9 dargestellen Benutzungslage die Arme 2 und 3 derart übergreift, dass ein versehentliches Ablösen der Arme aus dem Montageelement 4 verhindert wird.

Aus Fig. 9 wird auch ersichtlich, dass ein Klammerarm, dort der Klammerarm 2, mit einem Zentrierzahn 30 ausgerüstet ist, der in einer entsprechenden Ausbuchtung 29 im zugeordneten Klammerarm 3 derart eingreift, dass eine Mittellage der beiden Klammerarme 2 und 3 zu dem zu ergreifenden Gefäß gewährleistet ist.

Die zwischen Federhalter 32 angespannte Zugfeder ist in Fig. 9 nicht eingezeichnet, wobei an dieser Stelle nochmals bemerkt sei, dass die Zugfeder auch ersetzt werden kann, z.B. durch Magnete, etwa an den Seitenflanken der beiden Klammerarme 2 und 3 auf der Höhe der Federhalter 32. Dies kann auch in anderer Weise gestaltet sein, etwa durch Druckfedern, oder z.B. auch durch Torsionsfedern im Bereich der Schwenkwellen 6a od. dgl.

Natürlich sind die beschriebenen Ausführungsbeispiele der Erfindung noch in vielfacher Hinsicht abzuändern, ohne den Grundgedanken zu verlassen. So können andere Schließmechanismen als die hier dargestellte Zugfeder vorgesehen sein, die in den Figuren angedeutete Steckmontage aller Elemente zueinander kann in anderer Form vorgenommen sein u. dgl. mehr.

### Bezugszeichenliste:

- 1: Flaschenklammer
- 2: Klammerarm
- 2a: Verlängerungsbereich
- 3: Klammerarm
- 3a: Verlängerungsbereich
- 4: Montageelement
- 5: Schwenkachse
- 5a: Verlängerungsbereich
- 6: Schwenkachse
- 6a: Steckwelle
- 7: Zugfeder
- 8: Sperrelement
- 8a: Sperrelemententeil
- 8b: Sperrelemententeil
- 8a': Sperrzapfen
- 9: Drehachse
- 9a: Steckwelle
- 10a: Dauermagnet
- 10b: Dauermagnet
- 11a: Steuerkurve zum Entsperren
- 11b: Steuerkurve für Impuls zum Sperren
- 12: Steuerstift
- 13: Flaschenhals
- 14: Doppelpfeil
- 15: Stern
- 16: Stern
- 17: Seitenflanke
- 17': Seitenflanke
- 18: Seitenflanke
- 18a: Seitenflanke
- 19: Behälter
- 20: Flaschenklammer
- 21: Sperrelemententeil
- 22: Dauermagnet
- 23: Dauermagnet
- 24: Dauermagnet
- 25: Dauermagnet
- 26: Sperrnocken
- 27: Laufrad
- 28: Pfeil
- 29: Einbuchtung
- 30: Zahn
- 31: Sicherungsstegplatte
- 32: Federhalter

## Patentansprüche

1. Flaschenklammer (1) mit zwei über die jeweiligen Schwenk- achsen (5,6) hinaus verlängerten Klammerarmen (2,3), die in Schließstellung gehalten sind, **dadurch gekennzeichnet, dass** an einem Verlängerungsbereich (3a) eines Klammerarmes (3) ein verdrehbares Sperrelemententeil (8b,21) und am Verlängerungsbereich (2a) des anderen Klammerarmes (2) ein festes Sperrelemententeil (8a,8a') vorgesehen ist.

2. Flaschenklammer nach Anspruch 1, **dadurch gekennzeichnet, dass** das verdrehbare Sperrelemententeil (8b,21) mit einem Steuerstift (12) oder einer Steuerrolle (27) versehen ist, die sich zur Ausübung einer Entsperrkraft der beiden Sperrelemententeile an einer Steuerkurve (11,11a) anlegt.

3. Flaschenklammer nach Anspruch 1 oder 2, **dadurch gekennzeichnet, dass** das verdrehbare Sperrelement (8b) mit wenigstens einem Dauermagneten (10) ausgerüstet ist.

4. Flaschenklammer nach einem der Ansprüche 1 bis 3, **dadurch gekennzeichnet, dass** das verdrehbare Sperrelement (8b) und das feste Sperrelement (8a) mit wenigstens einem Dauermagneten (10a,10b) derart versehen sind, dass sich die Dauermagneten der beiden Sperrelemententeile anziehen.

5. Flaschenklammer nach einem der Ansprüche 1 bis 3, **dadurch gekennzeichnet, dass** der mit dem verdrehbaren Sperrelemententeil (21) ausgerüstete Verlängerungsbereich (3a) des einen Klammerarmes (3) mit einem Paar Dauermagneten (24,25) beidseitig der Drehachse (9) und das verdrehbare Sperrelemententeil (21) mit diesen zugeordneten zwei Dauermagneten (22,23) beidseitig der Drehachse (9) derart ausgerüstet ist, dass ein Paar der in der Gebrauchslage gegenüberliegenden Dauermagneten aufeinander eine abstoßende und das andere Dauermagnetenpaar eine anziehende Kraft ausübt.

6. Flaschenklammer nach Anspruch 5, **dadurch gekennzeichnet, dass** die Dauermagnetenpaare in unterschiedlicher Höhe bezogen auf die Schwenkebene im jeweiligen Element (3a,21) derart positioniert sind, dass ein Anschlag für das verdrehbare Sperrelement (21) in der entsperrten Position gebildet ist, wobei ein Magnetpaar in einem Element gleichpolig und im anderen Element gegenpolig positioniert ist.

7. Flaschenklammer nach einem der vorangehenden Ansprüche, **dadurch gekennzeichnet, dass** die mit der Seitenflanke (17,17') des festen Sperrelemententeiles (8a,8a') zusammenwirkende Seitenflanke (18, 18a) des verdrehbaren Sperrelemententeiles (8b,21) derart gekrümmt ausgebildet ist, dass ein Blockieren der Klammerarme bei unterschiedlichen Flaschenhalsdurchmessern gewährleistet ist.

8. Flaschenklammer nach einem der vorangehenden Ansprüche, **dadurch gekennzeichnet, dass** die mit der Seitenflanke (17') des festen Sperrelemententeiles (8a) zusammenwirkende Seitenflanke (18a) des verdrehbaren Sperrelemententeiles Dellen oder Nocken (26) zur Festlegung der Endposition des Sperrelementes (8a) der Klammerarme in unterschiedlichen Haltepositionen aufweist.

9. Flaschenklammer nach einem der vorangehenden Ansprüche, **dadurch gekennzeichnet, dass** ein Klammerarm (2 oder 3) mit einer Einbuchtung (29) für einen Zahn (30) am anderen Klammerarm (3 oder 2) zur Festlegung der Mittellage der Klammerarme ausgerüstet ist.

10. Flaschenklammer nach einem der vorangehenden Ansprüche, **dadurch gekennzeichnet, dass** die Klammerelemente über Steckverbindungen werkzeugfrei montierbar sind.

## Claims

1. Bottle clamp (1) comprising two clamp arms (2, 3) which extend beyond the respective pivot axes (5, 6) and which are held in the closed position, **characterised in that** a rotatable locking element part (8b, 21) is provided on an extension region (3a) of one clamp arm (3) and a stationary locking element part (8a, 8a') is provided on the extension region (2a) of the other clamp arm (2).

2. Bottle clamp according to claim 1, **characterised in that** the rotatable locking element part (8b, 21) is provided with a control pin (12) or a control roller (27) which bears against a control curve (11, 11a) in order to exert an unlocking force on the two locking element parts.

3. Bottle clamp according to claim 1 or 2, **characterised in that** the rotatable locking element (8b) is equipped with at least one permanent magnet (10).

4. Bottle clamp according to any one of claims 1 to 3, **characterised in that** the rotatable locking element (8b) and the stationary locking element (8a) are provided with at least one permanent magnet (10a, 10b) such that the permanent magnets of the two locking element parts attract each other.

5. Bottle clamp according to any one of claims 1 to 3, **characterised in that** the extension region (3a) of one clamp arm (3), which is equipped with the rotatable locking element part (21), is equipped with a pair of permanent magnets (24, 25) on both sides of the rotation axis (9), and the rotatable locking element part (21) is equipped with two permanent magnets (22, 23) associated therewith on both sides of the rotation axis (9) such that one pair of permanent magnets located opposite one another in the position of use exerts a repelling force with respect to each other and the other pair of permanent magnets exerts an attraction force.

6. Bottle clamp according to claim 5, **characterised in that** the pairs of permanent magnets are positioned at different heights in relation to the pivot plane in the respective element (3a, 21) such that a stop is formed for the rotatable locking element (21) in the unlocked position, wherein a pair of magnets is positioned homopolar in one element and contrapolar in the other element.

7. Bottle clamp according to any one of the preceding claims, **characterised in that** the side flank (18, 18a) of the rotatable locking element part (8b, 21) which cooperates with the side flank (17, 17') of the stationary locking element part (8a, 8a') is curved such that a blocking of the clamp arms is ensured with different bottle neck diameters.

8. Bottle clamp according to any one of the preceding claims, **characterised in that** the side flank (18a) of the rotatable locking element part which cooperates with the side flank (17') of the stationary locking element part (8a) has indentations or cams (26) for fixing the end position of the locking element (8a) of the clamp arms in different holding positions.

9. Bottle clamp according to any one of the preceding claims, **characterised in that** one clamp arm (2 or 3) is equipped with a notch (29) for a tooth (30) on the other clamp arm (3 or 2) for fixing the central position of the clamp arms.

10. Bottle clamp according to any one of the preceding claims, **characterised in that** the clamp elements can be assembled via plug-in connections without using tools.

## Revendications

1. Bride de fixation pour bouteilles (1) dotée de deux bras de fixation (2, 3) se prolongeant au-delà des axes respectifs de pivotement (5, 6), lesquelles sont maintenues en position fermée, **caractérisée en ce que** sont prévues, au niveau d'une zone de prolongement (3a) d'un bras de fixation (3), une partie pouvant pivoter formant un élément de blocage (8b, 21) et, au niveau de la zone de prolongement (2a) de l'autre bras de fixation (2), une partie fixe formant un élément de blocage (8a, 8a').

2. Bride de fixation pour bouteilles selon la revendication 1, **caractérisée en ce que** la partie pouvant pivoter formant un élément de blocage (8b, 21) est pourvue d'une tige de commande (12) ou d'un galet de commande (27), laquelle/lequel s'applique au niveau d'une came de commande (11, 11 a) afin d'exercer une force de déblocage des deux parties formant des éléments de blocage.

3. Bride de fixation pour bouteilles selon la revendication 1 ou 2, **caractérisée en ce que** l'élément de blocage pouvant pivoter (8b) est équipé d'au moins un aimant permanent (10).

4. Bride de fixation pour bouteilles selon l'une quelconque des revendications 1 à 3, **caractérisée en ce que** l'élément de blocage pouvant pivoter (8b) et l'élément de blocage fixe (8a) sont pourvus d'au moins un aimant permanent (10a, 10b) de telle manière que les aimants permanents des deux parties formant des éléments de blocage s'attirent.

5. Bride de fixation pour bouteilles selon l'une quelconque des revendications 1 à 3, **caractérisée en ce que** la zone de prolongement (3a), équipée de la partie pouvant pivoter formant un élément de blocage (21), de l'un des bras de fixation (3) est équipée, de part et d'autre de l'axe de rotation (9), d'une paire d'aimants permanents (24, 25), et **en ce que** la partie pouvant pivoter formant un élément de blocage (21) est équipée, de part et d'autre de l'axe de rotation (9), desdits deux aimants permanents (22, 23) associés auxdits aimants de telle manière qu'une paire constituée des aimants permanents se faisant face en position d'utilisation exerce une force de répulsion et que l'autre paire constituée d'aimants permanents exerce une force d'attraction.

6. Bride de fixation pour bouteilles selon la revendication 5, **caractérisée en ce que** les paires constituées d'aimants permanents sont positionnées, dans l'élément respectif (3a, 21), à des hauteurs différentes par rapport au plan de pivotement, de telle manière qu'une butée pour l'élément de blocage pouvant pivoter (21) se forme dans la position débloquée, sachant qu'une paire d'aimants positionnée dans un élément présente les mêmes pôles et qu'une paire d'aimants positionnée dans l'autre élément présente des pôles opposés.

7. Bride de fixation pour bouteilles selon l'une quelconque des revendications précédentes, **caractérisée en ce que** le flanc latéral (18, 18a), coopérant avec le flanc latéral (17, 17') de la partie fixe formant un élément de blocage (8a, 8a'), de la partie pouvant pivoter formant un élément de blocage (8a, 21) est réalisé de manière incurvée de manière à garantir un verrouillage des bras de fixation pour des goulots de bouteille présentant des diamètres divers.

8. Bride de fixation pour bouteilles selon l'une quelconque des revendications précédentes, **caractérisée en ce que** le flanc latéral (18a), coopérant avec le flanc latéral (17') de la partie fixe formant un élément de blocage (8a), de la partie pouvant pivoter formant un élément de blocage présente des bosses ou des saillies (26) servant à fixer la position finale de l'élément de blocage (8a) des bras de fixation dans diverses positions de maintien.

9. Bride de fixation pour bouteilles selon l'une quelconque des revendications précédentes, **caractérisée en ce qu'**un bras de fixation (2 ou 3) est équipé d'une indentation (29) pour une dent (30) au niveau de l'autre bras de fixation (3 ou 2) servant à fixer la position centrale des bras de fixation.

10. Bride de fixation pour bouteilles selon l'une quelconque des revendications précédentes, **caractérisée en ce que** les éléments de bride de fixation peuvent être montés sans outil par l'intermédiaire de systèmes d'assemblage par emboîtement.
